# EUROPEAN PATENT APPLICATION

(11) **EP 4 823 107 A1**
(43) Date of publication of application: **14.10.2026**
(21) Application number: 24899772.8
(22) Date of filing: 02.12.2024
(51) Int. Cl.: H04N 23/63

(54) **PHOTOGRAPHING METHOD AND APPARATUS, AND ELECTRONIC DEVICE**

(30) Priority: 05.12.2023 CN 202311654584
(71) Applicant: Vivo Mobile Communication Co., Ltd., Dongguan, Guangdong 523863 (CN)
(72) Inventor: LIU, Hui, Dongguan, Guangdong 523863 (CN)
(74) Representative: Conti, Marco
(86) International application number: PCT/CN2024/136086
(87) International publication number: WO 2025/119132

(57) **Abstract**

This application relates to the field of communication technologies, and discloses a capturing method and apparatus, and an electronic device. The method includes: obtaining a first RAW image based on an i^{th} capturing request sent by a camera application at a first moment, and then sending a first notification message to the camera application, where the first notification message is used for notifying that the camera application is allowed to continue to send a capturing request, and i is a positive integer greater than or equal to 1; and obtaining, when an (i+1)^{th} capturing request sent by the camera application at a second moment is received, a preset quantity of frames of a second RAW image based on the (i+1)^{th} capturing request. An interval between the first moment and the second moment is greater than or equal to a first preset duration and less than a second preset duration, and the second preset duration is twice the first preset duration.

## Description

### CROSS-REFERENCE TO RELATED APPLICATIONS

This application claims priority to Chinese Patent Application No. 202311654584.X filed in China on December 5, 2023, which is incorporated herein by reference in its entirety.

### TECHNICAL FIELD

This application relates to the field of communication technologies, and in particular, to a capturing method and apparatus, and an electronic device.

### BACKGROUND

With the development of imaging technologies and the increasing of photography demands of a user in daily life, capturing of relatively static scenes such as landscapes and portraits cannot satisfy the demands of the user. Demands for capturing sports and recording wonderful moments in daily life are increasing. Therefore, the requirement for experience and effect of a high-speed capture is getting higher and higher.

The high-speed capture refers to a situation where a user quickly clicks a capturing button twice or more in succession, and a time interval between a preceding capture and a next capture is short. Currently, when the user clicks the capturing button in quick succession, a system responds to capturing sometimes quickly, but sometimes slowly, or even fails to respond, causing a problem that intervals for the high-speed capture cannot be consistent, degrading capturing experience of the user.

### SUMMARY

An objective of embodiments of this application is to provide a capturing method and apparatus, and an electronic device, to resolve a problem that an existing high-speed capture interval cannot be consistent and uniform to degrade capturing experience of a user.

According to a first aspect, an embodiment of this application provides a capturing method. The method includes:
obtaining a first RAW image based on an i^{th} capturing request sent by a camera application at a first moment, and then sending a first notification message to the camera application, where the first notification message is used for notifying that the camera application is allowed to continue to send a capturing request, and i is a positive integer greater than or equal to 1; and
obtaining, when an (i+1)^{th} capturing request sent by the camera application at a second moment is received, a second RAW image based on the (i+1)^{th} capturing request, where an interval between the first moment and the second moment is greater than or equal to a first preset duration and less than a second preset duration, and the second preset duration is twice the first preset duration.

According to a second aspect, an embodiment of this application provides a capturing method. The method includes:
sending an i^{th} capturing request to a camera system at a first moment, where i is a positive integer greater than or equal to 1;
determining, when the first notification message sent by the camera system is received, and an (i+1)^{th} capturing request exists, a second moment based on a moment at which the i^{th} capturing request is generated and a moment at which the (i+1)^{th} capturing request is generated; and
sending the (i+1)^{th} capturing request to the camera system at the second moment,

The first notification message is used for notifying that the camera application is allowed to continue to send a capturing request, an interval between the first moment and the second moment is greater than or equal to a first preset duration and less than a second preset duration, and the second preset duration is twice the first preset duration.

According to a third aspect, an embodiment of this application provides a capturing apparatus, including:
a first obtaining module, configured to obtain a first RAW image based on an i^{th} capturing request sent by a camera application at a first moment;
a first sending module, configured to obtain a first RAW image based on an i^{th} capturing request sent by a camera application at a first moment, and then send a first notification message to the camera application, where the first notification message is used for notifying that the camera application is allowed to continue to send a capturing request, and i is a positive integer greater than or equal to 1; and
a capturing module, configured to obtain, when an (i+1)^{th} capturing request sent by the camera application at a second moment is received, a second RAW image based on the (i+1)^{th} capturing request, where an interval between the first moment and the second moment is greater than or equal to a first preset duration and less than a second preset duration, and the second preset duration is twice the first preset duration.

According to a fourth aspect, an embodiment of this application provides a camera system, including a processor and a memory. The memory stores a program or instructions runnable in the processor. The program or the instructions, when executed by the processor, implement the steps of the capturing method according to the first aspect.

According to a fifth aspect, an embodiment of this application provides a capturing apparatus, including:
a third sending module, configured to send an i^{th} capturing request to a camera system at a first moment, where i is a positive integer greater than or equal to 1;
a first processing module, configured to determine, when the first notification message sent by the camera system is received and an (i+1)^{th} capturing request exists, a second moment based on a moment at which the i^{th} capturing request is generated and a moment at which the (i+1)^{th} capturing request is generated; and
a fourth sending module, configured to send the (i+1)^{th} capturing request to the camera system at the second moment.

The first notification message is used for notifying that the camera application is allowed to continue to send a capturing request, an interval between the first moment and the second moment is greater than or equal to a first preset duration and less than a second preset duration, and the second preset duration is twice the first preset duration.

According to a sixth aspect, an embodiment of this application provides a camera application, including a processor and a memory. The memory stores a program or instructions runnable in the processor. The program or the instructions, when executed by the processor, implement the steps of the capturing method according to the second aspect.

According to a seventh aspect, an embodiment of this application provides a readable storage medium storing programs or instructions, and the programs or the instructions, when executed by a processor, implement the steps of the capturing method in the first aspect or the second aspect.

According to an eighth aspect, an embodiment of this application provides a chip. The chip includes a processor and a communication interface. The communication interface is coupled to the processor. The processor is configured to run a program or instructions to implement the capturing method according to the first aspect, or implement the capturing method according to the second aspect.

According to a ninth aspect, an embodiment of this application provides a computer program product. The program product is stored in a storage medium. The program product is executed by at least one processor to implement the capturing method according to the first aspect, or implement the capturing method according to the second aspect.

In embodiments of this application, the first RAW image is obtained based on the i^{th} capturing request sent by the camera application at the first moment, and then the first notification message is sent to the camera application. The first notification message is used for notifying that the camera application is allowed to continue to send a capturing request, and i is a positive integer greater than or equal to 1. In this way, the camera application may learn that image capturing corresponding to this capturing request ends, and a process of delivering a next capturing request may be performed. When the (i+1)^{th} capturing request sent by the camera application at the second moment is received, the second RAW image is obtained based on the (i+1)^{th} capturing request. An interval between the first moment and the second moment is greater than or equal to a first preset duration and less than a second preset duration, and the second preset duration is twice the first preset duration. In this way, a capturing interval is relatively uniform through coordination of the camera system and the camera application, thereby improving capturing experience of a user.

### BRIEF DESCRIPTION OF THE DRAWINGS

FIG. 1 is a schematic flowchart 1 of a capturing method according to an embodiment of this application;
FIG. 2 is a schematic diagram of scenario 1 in which a number of a RAW image is added to a first queue according to an embodiment of this application;
FIG. 3 is a schematic diagram of scenario 2 in which a number of a RAW image is added to a first queue according to an embodiment of this application;
FIG. 4 is a schematic diagram of scenario 3 in which a number of a RAW image is added to a first queue according to an embodiment of this application;
FIG. 5 is a schematic diagram of a scenario in which single-frame and multi-frame appear alternately;
FIG. 6 is a schematic diagram that an image number corresponding to a single-frame interval follows a "real-time reverse order" in a first queue according to an embodiment of this application;
FIG. 7 is a schematic diagram of image caching in a queue module of a camera system according to an embodiment of this application;
FIG. 8 is a schematic flowchart 2 of a capturing method according to an embodiment of this application;
FIG. 9 is a schematic flowchart 3 of a capturing method according to an embodiment of this application;
FIG. 10 is a schematic flowchart 4 of a capturing method according to an embodiment of this application;
FIG. 11 is a schematic diagram 1 of modules of a capturing apparatus according to an embodiment of this application;
FIG. 12 is a schematic structural diagram of a camera system according to an embodiment of this application;
FIG. 13 is a schematic diagram 2 of modules of a capturing apparatus according to an embodiment of this application; and
FIG. 14 is a schematic diagram of a hardware structure of an electronic device according to an embodiment of this application.

### DETAILED DESCRIPTION

Technical solutions in embodiments of this application are clearly described below with reference to the drawings in embodiments of this application. Apparently, the described embodiments are merely some rather than all of embodiments of this application. All other embodiments obtained by a person skilled in the art based on embodiments of this application fall within the protection scope of this application.

Terms "first", "second", and the like in the specification and the claims of this application are used to distinguish between similar objects, rather than describe a specific order or sequence. It should be understood that data used in this way may be transposed where appropriate, so that embodiments of this application may be implemented in an order different from those illustrated or described herein. In addition, the objects distinguished by "first", "second", and the like are generally of the same class and do not limit a quantity of objects. For example, one or more first objects may be arranged.

Through a high-speed capture, wonderful moments in daily life may be conveniently recorded. However, to ensure good capturing experience of the function, three requirements need to be met: first, a plurality of captures in a high speed can be supported, and picture quality can be ensured; second, consistency of capturing intervals needs to be ensured; and third, after the high-speed capture, through an operation of a user, an album can be accessed immediately to display a recently taken photo.

However, at present, mobile devices have defects in all of these aspects. Some of the devices run slowly in the high-speed capture and do not even respond for a long time. Some of the devices cannot support many captures and do not support the high-speed capture after capturing for six or seven times. For some of the devices, when an album is accessed through a user's operation immediately after the high-speed capture, photos are slowly displayed, and the photos are displayed only after all photos are processed, or photos taken before the high-speed capture are directly displayed. Some of the devices can support the high-speed capture, but generate pictures with poor quality. These greatly affect capturing experience of a user and cannot meet requirements of the user.

To resolve the technical problem, embodiments of this application provide a capturing method and apparatus, and an electronic device. The capturing method provided in embodiments of this application is described below with reference to the drawings through specific embodiments and application scenarios thereof.

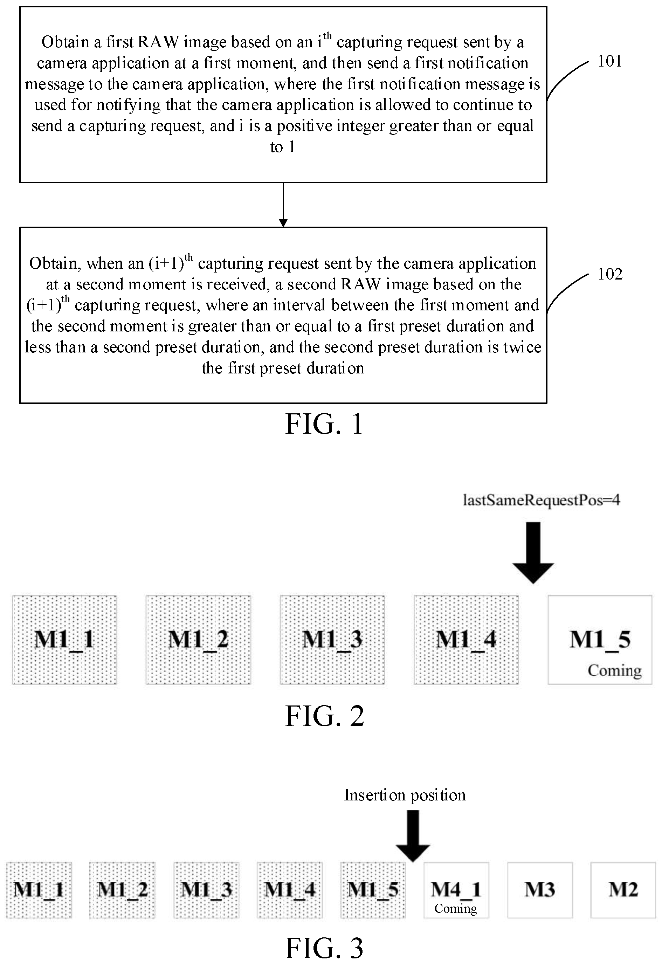

As shown in FIG. 1, an embodiment of this application provides a capturing method. The method is performed by a camera system in an electronic device. The method may specifically include the following steps.

Step 101: Obtain a first RAW image based on an i^{th} capturing request sent by a camera application at a first moment, and then sending a first notification message to the camera application, where the first notification message is used for notifying that the camera application is allowed to continue to send a capturing request, and i is a positive integer greater than or equal to 1.

Herein, i = 1, 2, 3, ..., and it should be noted that the camera application records a quantity of capturing requests delivered to the camera system.

It should be understood that if a capturing request to be sent by the camera application is a 1^{st} capturing request, it does not need to be sent after a notification message (used for notifying that the camera application is allowed to continue to send a capturing request) sent by the camera system is received, and the capturing request may be sent after being generated.

Herein, a function of the first notification message is to enable the camera application to learn that image capturing corresponding to this capturing request ends, and a process of delivering a next capturing request may be performed.

Step 102: Obtain, when an (i+1)^{th} capturing request sent by the camera application at a second moment is received, a second RAW image based on the (i+1)^{th} capturing request, where an interval between the first moment and the second moment is greater than or equal to a first preset duration and less than a second preset duration, and the second preset duration is twice the first preset duration.

It should be understood that the first preset duration is a preset capturing interval time T, and this interval time may be dynamically adjusted based on a hand speed of a user. Through data analysis, optionally, the first preset duration is 200 ms, which is closest to a normal hand speed when the user performs a high-speed capture.

Further, after the second RAW image is obtained, the method of this application further includes:
sending a second notification message to the camera application, where the second notification message is used for notifying that the camera application is allowed to continue to send a capturing request. Then, i+1 is assigned to i, and the foregoing step 101 to step 102 are performed.

To be specific, as long as the camera system receives the capturing request sent by the camera application, the steps are repeatedly performed. Then, an interval between the first moment (namely, a sending moment for the i^{th} capturing request) and the second moment (namely, a sending moment for the (i+1)^{th} capturing request) is greater than or equal to the first preset duration and is less than the second preset duration. For example, an interval between a sending moment for a 1^{st} capturing request and a sending moment for a 2^{nd} capturing request of the camera application is within a set duration range, and an interval between the sending moment for the 2^{nd} capturing request and a sending moment for the 3^{rd} capturing request is within a set duration range, where the set duration ranges are the same. In this way, it may be understood that, for a plurality of captures, a capturing interval between adjacent captures is relatively uniform, thereby achieving consistency of the capturing intervals and improving capturing experience of a user.

In an optional embodiment, in the foregoing step 101, the obtaining the first RAW image includes:
obtaining n frames of the first RAW image when i is less than or equal to a preset quantity of times, where n is a positive integer greater than or equal to 2.

Herein, the preset quantity of times is set to M. Then, in preceding M capturing requests delivered by the camera application, the camera system obtains a plurality of frames of the first RAW image for each capturing request (namely, the camera system captures the plurality of frames of the first RAW image, for example, 2 frames, 4 frames, or the like), then performs multi-frame image processing on the captured plurality of frames of the first RAW image, and finally outputs a one-frame image, thereby improving picture quality of a photographed picture.

Alternatively, one frame of a first RAW image is obtained when i is greater than a preset quantity of times.

Herein, when i is greater than a preset quantity of times, that is, when the camera application delivers more than M capturing requests, the camera system acquires a frame of the first RAW image for each subsequent capturing request (to be specific, the camera system captures a frame of the first RAW image), then performs single-frame image processing on the captured frame of the first RAW image, and finally outputs a frame of an image. Apparently, picture quality of a single-frame picture is worse than picture quality of an output picture after a plurality of frames of RAW images are processed. However, an advantage of the single-frame picture is a high processing speed, implementing a plurality of high-speed captures. Picture quality of a picture processed for preceding M capturing requests is ensured. Therefore, this embodiment can not only support high-speed capture for multiple times, but also ensure picture quality.

It should be understood that this embodiment corresponds to a capturing policy of M + N. Detailed explanations are as follows.

M: for a normal capture (a user clicks once to capture, and a capturing request is delivered), a camera system needs to capture multi-frame RAW data (for example, 2-frame, 4-frame, or the like), feed the captured multi-frame RAW data to an algorithm for multi-frame processing, and finally output one-frame data, which improves effect of capturing a picture. Therefore, M means M multi-frame captures.

N: for a normal capture (the user clicks once to capture, and a capturing request is delivered), the camera system needs to capture one-frame RAW data, and then feeds the one-frame RAW data to an algorithm for single-frame processing. Apparently, a single-frame picture has effect worse than effect of a multi-frame image, but has an advantage of a high processing speed. Therefore, N means N single-frame captures. A design of a single-frame interval (N) also provides support for implementation of infinite capturing.

A scenario in which a plurality of frames are captured for photography consumes longer time than a scenario in which a single frame is captured for photography, a time for an algorithm to process a plurality of frames is longer than a time for an algorithm to process a single frame. In addition, more space in an internal memory is occupied for a multi-frame scenario than for a single-frame scenario. Therefore, to ensure experience and picture quality for the high-speed capture, the capturing policy of M + N is used. A multi-frame capture is fully performed first, and then a single-frame capture is fully performed. For example, it explicitly specifies that a plurality of frames are captured 20 times and a single frame is captured 30 times, namely, M = 20 and N = 30. Certainly, M and N are dynamically adjusted based on a scenario.

For example, for an ordinary capturing mode or a motion mode, effect is preferred, an algorithm processing time is short, and a speed is mainly focused, then M = 20 and N = 30.

For a portrait mode, a processing time for a portrait algorithm is long. To ensure a capturing speed, a multi-frame interval needs to be reduced and a single-frame interval needs to be increased, and therefore, M = 10 and N = 40.

In addition, if random access memories (Random Access Memory, RAM) of some devices are relatively small, for example, an 8-G device, to reduce a peak value of an internal memory, the multi-frame interval may be reduced, where M = 7 and N = 10.

As an optional embodiment, the method of this application may further include:
adding, after each frame of the first RAW image is obtained during the obtaining of the first RAW image, a number of the obtained first RAW image to a first queue, where the number of the first RAW image includes a capture ordinal corresponding to the first RAW image, or the number of the first RAW image includes the capture ordinal corresponding to the first RAW image and a frame number of the first RAW image in the capture ordinal.

It should be noted that if a quantity of frames of the first RAW image is multiple, the number of the first RAW image includes a capture ordinal corresponding to the first RAW image and a frame number of the first RAW image in the capture ordinal. For example, the number of the first RAW image is Mi_1, indicating a 1^{st} frame for i^{th} capturing.

If the quantity of frames of the first RAW image is one, the number of the first RAW image includes a capture ordinal corresponding to the first RAW image. For example, the number of the first RAW image is Mi, indicating the i^{th} capturing.

The first queue is a queue of numbers of to-be-processed RAW images; capture ordinals of remaining numbers in the first queue other than a capture ordinal of a target number are reversely ordered, the capture ordinal of the target number is the same as a first capture ordinal, the first capture ordinal is a capture ordinal corresponding to a RAW image on which image processing is being performed currently; and if the capture ordinal corresponds to at least two frames of the RAW image, frame numbers corresponding to the at least two frames of the RAW image are arranged in sequence in the capture ordinal.

It should be noted that, after acquiring (capturing) the RAW image based on the capturing request delivered by the camera application, the camera system performs image processing on the captured RAW image based on a sequence in the first queue. Specifically, when starting to process capturing, the camera system always processes a RAW image corresponding to an image number that is ranked at a first position in the first queue.

Herein, capture ordinals of remaining numbers in the first queue other than a capture ordinal of a target number are reversely ordered (such an order may be referred to as a "real-time reverse order"). An objective of this design is to preferentially perform image processing on a latest captured RAW image. In this way, after a high-speed capture, if an album is immediately accessed through an operation of a user, a picture recently taken in this high-speed capture is displayed. To be specific, the user can see the picture recently taken in the high-speed capture, thereby improving capturing experience for the user.

In this embodiment, the adding the number of the obtained first RAW image to the first queue is divided into the following three scenarios, which may specifically include:
1) adding the number of the obtained first RAW image after a first position of the first queue when the first capture ordinal is an i^{th} time, and a frame number in the number of the obtained first RAW image represents a j^{th} frame of the first RAW image in all the first RAW images, where the first position is a position in which a number of a (j-1)^{th} frame of the first RAW image in all the first RAW images is located.

The scenario corresponds to that the first RAW image corresponding to the i^{th} capturing request is being processed, but capturing of the first RAW image corresponding to this capturing request has not been completed (it should be noted that capturing of the RAW image based on the capturing request and image processing are performed simultaneously). Processing logic corresponding to the scenario is described below through example 1.

In scenario 1), referring to FIG. 2, when an M1 capture is being processed, M1_5 is a number of an image waiting to be sorted, namely, a number of a RAW image to be inserted into a first queue ReqExeQueue, and M1_5 represents a 5^{th} frame of a RAW image captured for a first capture.

Processing logic thereof is: If a capture ordinal (CaptureID) of an inserted frame M1-5 is the same as that of M1 (which is being photographed), a position (lastSameRequestPos) of a last frame number (indicated by Capture_Sub_ID) in a current ReqExeQueue sequence that has a CaptureID the same as M1 (which is being photographed) needs to be found, and then M1_5 is inserted after the position. For example, M1_5 is inserted after M1_4 in FIG. 2.

2) Adding the number of the obtained first RAW image after a second position of the first queue when the first capture ordinal is different from the ith time and the frame number in the number of the obtained first RAW image represents a first frame of the first RAW image in all the first RAW images, where the second position is a position of a frame number ranked last in the first capture ordinal in the first queue.

The scenario corresponds to that a capture ordinal corresponding to a RAW image that is being processed is different from that of an i^{th} capturing request, and to be specific, what is to be inserted into a first queue is a number of a first frame of a first RAW image obtained through the i^{th} capturing request. Processing logic corresponding to the scenario is described below through example 2.

In scenario 2), referring to FIG. 3, when an M1 capture is being processed, M4_1 is a number of an image waiting to be sorted, namely, a number of a RAW image to be inserted into a first queue ReqExeQueue, and M4_1 represents a 1^{st} frame of a RAW image captured for a fourth capture.

Processing logic thereof is: If a capture ordinal (CaptureID) of an inserted frame M4_1 is different from that of M1 (which is being photographed), a last Capture_Sub_ID position of M1 (which is being photographed) in a current ReqExeQueue sequence needs to be found, and M4_1 is inserted after the position, as shown in FIG. 3, M4_1 is inserted after M1_5.

3) Adding the number of the obtained first RAW image after a third position of the first queue when the first capture ordinal is different from the i^{th} time, the number of the obtained first RAW image represents a k^{th} frame of the first RAW image in all the first RAW images, and k ≠ 1, where the third position is a position of a frame number of a (k-1)th frame of the first RAW image in all the first RAW images, a position of a frame number of a first frame of the first RAW image in all the first RAW images is ranked after a fourth position in the first queue, and the fourth position is the position of the frame number ranked last in the first capture ordinal.

The scenario corresponds to that a capture ordinal corresponding to a RAW image that is being processed is different from that of an i^{th} capturing request, and to be specific, what is to be inserted into a first queue is a number of a first RAW image obtained through the i^{th} capturing request other than a first frame. Processing logic corresponding to the scenario is described below through example 3.

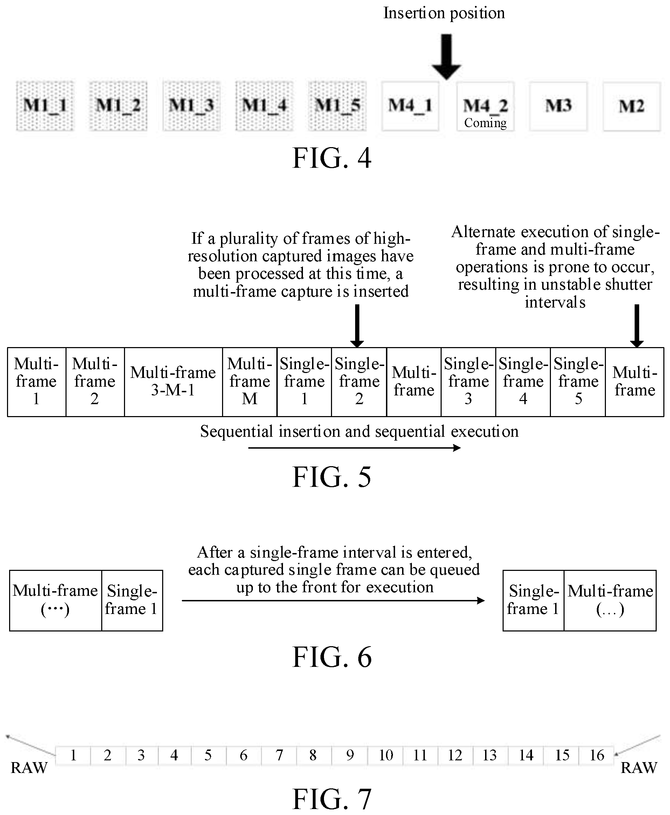

In scenario 3), referring to FIG. 4, when an M1 capture is being processed, M4_2 is a number of an image waiting to be sorted, namely, a number of a RAW image to be inserted into a first queue ReqExeQueue, and M4_2 represents a 2^{nd} frame of a RAW image captured for a fourth capture.

Processing logic thereof is: If a capture ordinal (CaptureID) of an inserted frame M4_2 is different from that of M1 (which is being photographed), two subscripts need to be found. Specifically, for a first subscript, a position of last Capture_Sub_ID of M1 (which is being photographed) in a current ReqExeQueue sequence needs to be found. For a second subscript, a position of last Capture_Sub_ID (m_isSecondFrmPos) of 2^{nd} to-be-processed capturing M4 needs to be found and then M4_2 is inserted after the position. As shown in FIG. 4, M4_2 is inserted after M4_1.

Processing logic of the foregoing several scenarios implements that each time a camera system starts to process capturing, a RAW image corresponding to an image number ranked at a first position in a first queue is processed, to preferentially perform image processing on a latest captured RAW image.

The foregoing several scenarios all involve processing a plurality of frames of a RAW image obtained through a capturing request. It should be noted that similar logic is also used for a frame of a RAW image obtained through a capturing request, and image numbers thereof also follow "real-time reverse order" in the first queue. Assuming that no real-time reverse order function exists for the single-frame interval (N) mentioned above, firstly, all captures are performed based on a sequence of capturing clicks by a user. Because a single frame or a plurality of frames are determined based on a scenario change, referring to a scenario corresponding to first M capturing clicks in FIG. 5, a plurality of frames need to be captured. Later, due to the scenario change, a single frame needs to be captured. Referring to a single-frame 1 and a single-frame 2 in FIG. 5, if a plurality of frames of high-resolution captured images have been processed in front at this time (namely, when the single-frame 2 is being processed), a multi-frame capture is inserted. In this way, a case that a plurality of frames are captured occurs in some scenarios, and a case that a single frame is captured occurs in some scenarios, so that a single frame and a plurality of frames may occur alternately. In this way, a shutter interval is unstable. Secondly, because a time for processing a plurality of frames through an algorithm is significantly longer than that for processing a single frame, a single-frame capture is performed fast, and a multi-frame capture is performed slowly, and a final result may be caused, where a capturing interval is unstable for a user and is long sometimes or short sometimes. Thirdly, because no real-time reverse order exists, all captures are performed in sequence. After M multi-frame captures and N single-frame captures are all performed, a next capture may only continue after a foremost multi-frame capture is performed. A time for a multi-frame capture may be up to 1.2 s. Therefore, in this case, a capture may be performed only with a wait time of about 1.2 s. Therefore, to prevent the above problem from occurring, similar logic is also used for obtaining a frame of a RAW image under a capturing request, and image numbers therefor also follow the "real-time reverse order" in the first queue. Referring to FIG. 6, a detailed description is as follows.

After a single-frame interval and a real-time reverse order function are added, once the single-frame interval is entered (namely, capturing after i is greater than a preset quantity of times), a single frame is always processed preferentially through queue-jumping. Because a single-frame processing time is usually less than 200 ms, a quantity of single-frame captures being processed is difficult to accumulate.

To implement infinite capturing, M captures (a capturing request for capturing a plurality of frames of a RAW image) is set first, and then, N captures (a capturing request for capturing a frame of a RAW image) is set. A single-frame scenario and a multi-frame scenario are no longer determined based on a scenario change, and picture quality is sacrificed for experience. Because after capturing, M multi-frame captures are performed first, and the M captures may ensure a picture effect and satisfy a user's requirement. After the single-frame interval is entered, almost all subsequent captured frames are single frames. Because a processing time for a single frame is fast, no piling-up problem occurs. In this case, "the infinite capturing" may be implemented.

In an optional embodiment, the method of this application may further include:
storing the first RAW image frame by frame in a flash memory based on an image obtaining sequence after the first RAW image is obtained.

In this embodiment, the obtained first RAW image is stored in a UFS flash memory because a space of the flash memory is much larger than that of an internal memory RAM. The first RAW image is cached to the flash memory, which may greatly reduce pressure for the internal memory RAM. In addition, the first RAW image is cached to the flash memory, which may implement a function of continuous high-speed captures for a plurality of times through the foregoing capturing method, greatly improving a speed and a quantity of times for a high-speed capture.

Based on this embodiment, the method of this application may further include:
(1) Reading, when image processing starts to be performed for i^{th} capturing based on a number order in the first queue, a cached first RAW image corresponding to the i^{th} capturing from the flash memory.

It should be noted that, during a preview, the camera application caches each frame of a RAW image in a queue module (referred to as an RDI Queue module) of the camera system. A caching queue with a length of 16 for dynamically caching the RAW image is set in the module and is conveniently used for capturing. Referring to FIG. 7, the caching queue belongs to a first-in first-out queue. A length of the queue may be dynamically adjusted. Herein, each frame of a RAW image in the queue corresponds to a preview identifier (preview ID) in sequence based on a preview time, and a capturing request delivered by a camera application has a preview ID and a capturing ID (CaptureID) that correspond to the preview identifier, which is also referred to as a capture ordinal.

The reading the cached first RAW image corresponding to the i^{th} capturing from the flash memory specifically includes:
the cached first RAW image corresponding to the i^{th} capturing is matched from the flash memory based on a preview ID and a capturing ID that correspond to the i^{th} capturing request, is read frame by frame into a buffer Buffer of the camera system, and then waits for next processing through an algorithm.

(2) Performing image processing on the first RAW image corresponding to the i^{th} capture, to obtain a processed image frame.

Herein, if the first RAW image corresponding to the i^{th} capturing is of a plurality of frames, RAW domain algorithm processing is performed on the first RAW image of a plurality of frames, to obtain a one-frame image in a RAW format or a YUV format. Then, image processing is performed on the one-frame image in a RAW format or a YUV format to generate a final image in a JPEG format.

If the first RAW image corresponding to the i^{th} capturing is of one frame, RAW domain algorithm processing is performed on the first RAW images of one frame, to obtain a one-frame image in a RAW format or a YUV format. Then, image processing is performed on the one-frame image in a RAW format or a YUV format to generate a final image in a JPEG format.

In another optional embodiment, the method of this application may further include:
storing the first RAW image frame by frame in a random access memory RAM based on the image obtaining sequence after the first RAW image is obtained and i is less than or equal to a preset value; or
storing the first RAW image frame by frame in a flash memory based on the image obtaining sequence after the first RAW image is obtained and i is greater than the preset value.

In this embodiment, considering an actual situation in which the RAM may support first several times (which is set to a preset value herein) and a problem is a service life of the flash memory, it is set that when i reaches the preset value, for example, 3 times, the flash memory starts to be used for data caching to improve efficiency.

Based on this embodiment, the method of this application may further include:
reading, when image processing starts to be performed for i^{th} capturing based on a number order in the first queue, a cached first RAW image corresponding to the i^{th} capturing from the RAM if i is less than or equal to the preset value;
reading the cached first RAW image corresponding to the i^{th} capturing from the flash memory if i is greater than the preset value; and
where it should be noted that, for a specific process of reading the cached first RAW image corresponding to the i^{th} capturing from the RAM or the flash memory, reference may be made to descriptions in the previous embodiment. Details are not described herein again,
performing image processing on the first RAW image corresponding to the i^{th} capture, to obtain a processed image frame.

Herein, for a specific image processing process, reference is also made to the description in the previous embodiment. Details are not described herein again.

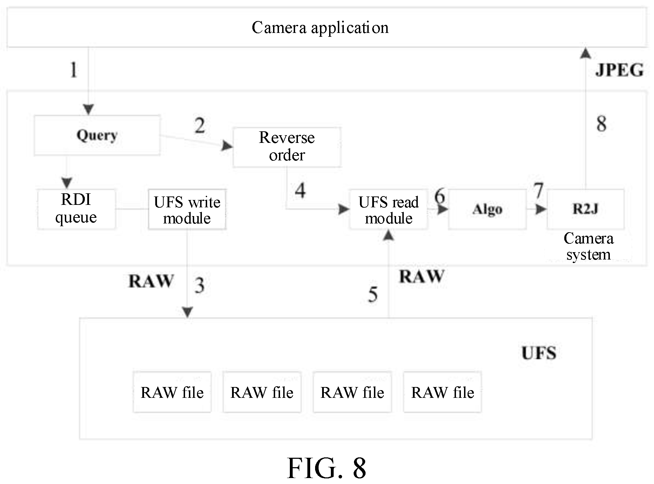

An implementation process of the capturing method of this application is specifically described below through example 3 and referring to FIG. 8.

During a preview, the camera application caches each frame of a RAW image in a queue module (referred to as an RDI Queue module) of the camera system. A caching queue with a length of 16 for dynamically caching the RAW image is set in the module and is conveniently used for capturing.

Step 1: A camera application delivers a capturing request to a camera system, and after receiving the capturing request, the camera system first performs the following operations in a Query module (query module):
1) determining whether a current capture is a multi-frame capture or a single-frame capture based on two parameters: a multi-frame capturing count MCount and a single-frame capturing count NCount, where, for example, when the MCount ≤ 20, it indicates that the current capture is the multi-frame capture; when MCount > 20, it indicates that the multi-frame capture is fully performed, and then this capturing is the single-frame capture; and in addition, RequestID and CaptureID corresponding to this capturing request are recorded, where the RequestID includes a preview ID and the CaptureID, and the CaptureID refers to a capturing ID; and
2) after it is determined that the current capture is the multi-frame capture or the single-frame capture, a corresponding counting parameter MCount or NCount is counted by +1, for example, MCount+1 for the multi-frame capture and NCount+1 for the single-frame capture.

A selection of timing when the UFS flash memory starts to be used for caching the RAW image after the camera system receives the capturing request should be noted. In principle, the RAW image may be cached into the UFS from a first capture. However, in an actual case, considering the RAM itself which may support several previous captures and a problem of a service life of the UFS, it may be set to start to use the UFS for data caching when the Mcount reaches 3 to improve efficiency.

It should be noted that in step 1, the capturing request may be delivered at an interval of T = 200 ms. For the camera system HAL, step 1 is repeated to record each capture. After the multi-frame capture under the MCount is fully performed, the single-frame capture under the NCount continues.

Step 2: The camera system determines, based on a current scenario and a capturing policy, a quantity of frames FCount of a real-time RAW image that needs to be captured corresponding to the CaptureID if it is currently a multi-frame capture scenario, for example, 4 frames, 6 frames, or 8 frames, or FCount = 1 if it is a single-frame capture scenario indicating that only a frame of a RAW image is needed.

Then, real-time reverse order processing is performed in a ReqExeQueue sequence in a reverse order module (Reverse Order module). A corresponding frame is captured each time and then is allowed to be ordered in a real-time reverse order. For a specific ordering process, reference is made to descriptions of the foregoing corresponding sections. Details are not described herein again.

After the ordering is completed, CaptureID that ranks first is extracted from the ReqExeQueue. The camera system starts to perform capture processing.

Step 3: When the foregoing step 2 is performed, frame capturing processing is also performed in parallel, a UFS write module picks latest FCount RAW images from a caching queue of an RDIQueue module, and each frame of a RAW image is written into a UFS flash memory frame by frame in a format of a CaptureID_RequestID_X.raw file and cached, where X represents 1-FCount.

Step 4: When the camera system actually starts to process this capture, the cached FCount RAW images are matched from the UFS through a UFS read module based on RequestID and CaptureID of this capturing and read into a camera system Buffer frame by frame to wait for being fed into an algorithm for processing in a next step.

Step 5: After the FCount RAW images needed for this capturing are read from the UFS, they may be directly sent to an algorithm module (Algo) for algorithm processing; and generally, algorithm processing consumes a long time, and to keep a CPU from being preempted too much by the algorithm, the algorithm is suggested for serial processing.

Herein, a RAW image is sent to an algorithm for processing through two manners: a manner is frame-by-frame processing, where the UFS read module directly sends a frame to the algorithm for processing after reading the frame from the UFS; and the other manner is that the UFS read module reads all FCount RAW images from the UFS and sends the FCount RAW images to the algorithm for processing. A used manner may be dynamically selected based on an algorithm requirement.

In addition, in an algorithm processing process, an image obtained after a plurality of frames of a RAW image are processed has effect much better than effect under processing of a single frame of a RAW image.

Step 6: The algorithm module (Algo) performs Raw domain algorithm processing on the sent FCount RAW images, synthesizes one-frame data in a Raw format or a YUV format after the processing is completed, and then performs the following two operations:
1) notifying, in a form of a callback interface, the UFS read module that the FCount RAW images have been processed; after receiving the callback notification, the UFS read module deletes a corresponding RAW file, a CaptureID_RequestID_X.raw file, from the UFS based on the RequestID and CaptureID for this capturing; and
2) sending the synthesized one-frame data in a Raw format or a YUV format after processing is completed to an R2J module for further processing to generate a final file in a JPEG format. Herein, the R2J module is an image format conversion module, configured to convert an image in a Raw format or a YUV format into an image in a JPEG format.

Step 7: The R2J module continues to perform processing and finally generates a file in a JPEG format (namely, a finally generated image).

Step 8: The R2J module processes the generated image in a JPEG format, which is called back to an APP through an interface call and subjected to processing for storage in an album.

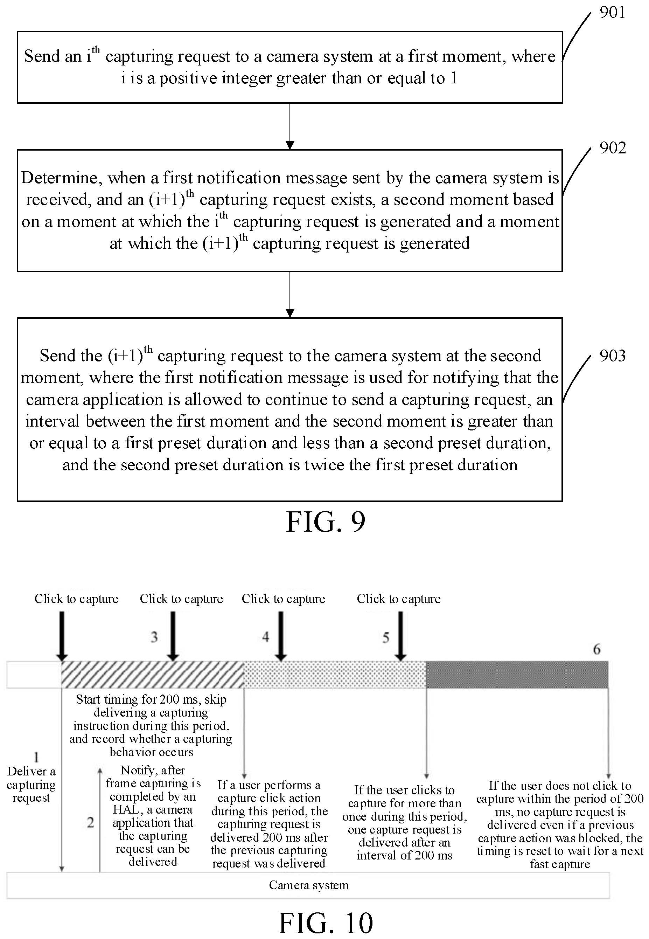

As shown in FIG. 9, an embodiment of this application provides a capturing method. The method is performed by a camera application in an electronic device. The method specifically includes:

Step 901: Send an i^{th} capturing request to a camera system at a first moment, where i is a positive integer greater than or equal to 1.

Herein, i = 1, 2, 3, ..., and it should be noted that the camera application records a quantity of capturing requests delivered to the camera system.

Step 902: Determine, when the first notification message sent by the camera system is received, and an (i+1)^{th} capturing request exists, a second moment based on a moment at which the i^{th} capturing request is generated and a moment at which the (i+1)^{th} capturing request is generated, where the first notification message is used for notifying that the camera application is allowed to continue to send a capturing request.

In some embodiments, step 902 specifically includes:
determining that the second moment is a moment separated from the first moment by the first preset duration when an interval between the moment at which the (i+1)^{th} capturing request is generated and the moment at which the i^{th} capturing request is generated is less than the first preset duration.

Herein, an interval between the moment at which the (i+1)^{th} capturing request is generated and the moment at which the i^{th} capturing request is generated is less than the first preset duration, which indicates that a user performs capturing input twice or more (a case of two or more captures hardly occurs, but even if the case occurs, the camera application records only a capturing request) within the first preset duration. For capturing consistency, the (i+1)^{th} capturing request is not sent instantly, but is sent in a delayed manner. To be specific, it is determined that the second moment is a moment separated from the first moment by the first preset duration. To be specific, subsequently, the (i+1)^{th} capturing request is sent to the camera system at a moment separated from the first moment by the first preset duration.

It should be understood that the first preset duration is a preset capturing interval time T, and this interval time may be dynamically adjusted based on a hand speed of a user. Through data analysis, optionally, the first preset duration is 200 ms, which is closest to a normal hand speed when the user performs a high-speed capture.

It should be noted that when sending the 1^{st} capturing request, the camera application starts timing, and the i^{th} capturing request corresponds to a 1^{st} first preset duration.

Alternatively, determine that the second moment is the moment at which the (i+1)^{th} capturing request is generated when the interval between the moment at which the (i+1)^{th} capturing request is generated and the moment at which the i^{th} capturing request is generated is greater than or equal to the first preset duration and is less than the second preset duration.

Herein, an interval between the moment at which the (i+1)^{th} capturing request is generated and the moment at which the i^{th} capturing request is generated is greater than or equal to the first preset duration and less than the second preset duration, which indicates that two adjacent capturing inputs from the user are performed based on the normal hand speed and are relatively uniform. Therefore, it is determined that the second moment is the moment at which the (i+1)^{th} capturing request is generated. To be specific, the (i+1)^{th} capturing request is then sent to the camera system at the moment at which the (i+1)^{th} capturing request is generated.

Step 903: Send the (i+1)^{th} capturing request to the camera system at the second moment. An interval between the first moment and the second moment is greater than or equal to the first preset duration and less than the second preset duration, and the second preset duration is twice the first preset duration.

It should be noted that if a capturing request to be sent by the camera application is the 1^{st} capturing request, a notification message sent by the camera system does not need to be received. Except for the 1^{st} capturing request, other capturing requests are allowed to be sent only when the notification message sent by the camera system is received.

It should be noted that a capturing scenario aimed at this application is a high-speed capture. The camera application sends capturing requests for many times based on a capturing input of a user. To be specific, the camera application repeatedly performs the foregoing steps until no capturing input from the user is received within an m^{th} first preset duration. Then, an interval between a sending moment (a first moment) of the i^{th} capturing request and a sending moment (a second moment) of the (i+1)^{th} capturing request is greater than or equal to the first preset duration and is less than the second preset duration. For example, an interval between a sending moment for a 1^{st} capturing request and a sending moment for a 2^{nd} capturing request is within a set duration range, and an interval between the sending moment for the 2^{nd} capturing request and a sending moment for the 3^{rd} capturing request is within a set duration range, where the set duration ranges are the same. In this way, it may be understood that, for a plurality of captures, a capturing interval between adjacent captures is relatively uniform, thereby achieving consistency of the capturing intervals and improving capturing experience of a user.

In an optional embodiment, the method of this application further includes:
recording, when an interval between the moment at which the (i+1)^{th} capturing request is generated and the moment at which the i^{th} capturing request is generated is less than the first preset duration, the (i+1)^{th} capturing request after the moment at which the (i+1)^{th} capturing request is generated.

Correspondingly, the sending the (i+1)^{th} capturing request to the camera system at the second moment includes:
sending, when it is determined at the second moment that the (i+1)^{th} capturing request is recorded, the (i+1)^{th} capturing request to the camera system.

It should be noted that a purpose of recording the (i+1)^{th} capturing request is to enable the camera application to send the (i+1)^{th} capturing request to the camera system based on this recording to ensure capturing consistency.

In an optional embodiment, the method of this application further includes:
prohibiting, when the first notification message sent by the camera system has not been received at a third moment and the (i+1)th capturing request exists, sending of the (i+1)th capturing request, where a time interval between the third moment and the first moment is the first preset duration.

In other words, if the first notification message sent by the camera system is not received in the first preset duration after the sending moment of the i^{th} capturing request, namely, a notification to allow the camera application to continue to send a capturing request, the (i+1)^{th} capturing request is ignored.

In an optional embodiment, the method of this application further includes:
clearing, if a capturing request is recorded before an m^{th} first preset duration, the recorded capturing request when a capturing input from a user has not been received within the m^{th} first preset duration, where m is a positive integer greater than 1.

It should be noted that when sending the 1^{st} capturing request, the camera application starts timing, and the i^{th} capturing request corresponds to a 1^{st} first preset duration.

Herein, a capturing input from a user is not received within the m^{th} first preset duration, which indicates that this high-speed capture ends. Herein, in a case that a capturing request is recorded before the m^{th} first preset duration, the recorded capturing request is cleared, namely, resetting for clearing, to wait for a next high-speed capture.

An implementation process of the capturing method of this application is specifically described below through example 4 and refers to FIG. 10.

Step 1: A user clicks a capturing button in a camera application to start to deliver a capturing request to a camera system.

Step 2: After the capturing request is received, the camera system starts frame capturing processing; after frame capturing is completed, the camera system sends, through an interface call, a callback notification that next capturing may be performed to the camera application, otherwise, if the frame capturing is not completed, the camera application is not allowed to continue delivering the capturing request.

Step 3: If the user continues to click to capture within T = 200 ms:
a) if the camera application does not receive a notification that the camera system allows to continue capturing, this capturing request is directly ignored; and
b) if the camera application receives the notification that the camera system allows to continue capturing, the camera application temporarily does not deliver the capturing request, but records the capturing request, and if a plurality of capturing requests occur during 200 ms, only one is recorded.

Step 4: When condition b) in step 3 is satisfied, the camera application determines whether a recorded capturing request exists after T = 200 ms; if a record exists, the camera application directly delivers this recorded capturing request to the camera system, and also after completing frame capturing by the camera system, a notification that capturing may continue is sent to the camera application; and then processes of steps 1, 2, and 3 are repeated.

Step 5: Same as step 3, in this case, determine whether a capturing request exists within T = 200 ms, and select, based on a notification returned by the camera system, ignoring or recording of the capturing request if the capturing request exists.

Step 6: If no user clicks to capture within a time period of T = 200 ms, clear out, through resetting, the previously recorded capturing request to wait for a next high-speed capture.

The capturing method provided in embodiments of this application may be performed by a capturing apparatus. In embodiments of this application, a capturing apparatus provided in embodiments of this application is described by using an example in which the capturing apparatus performs the capturing method.

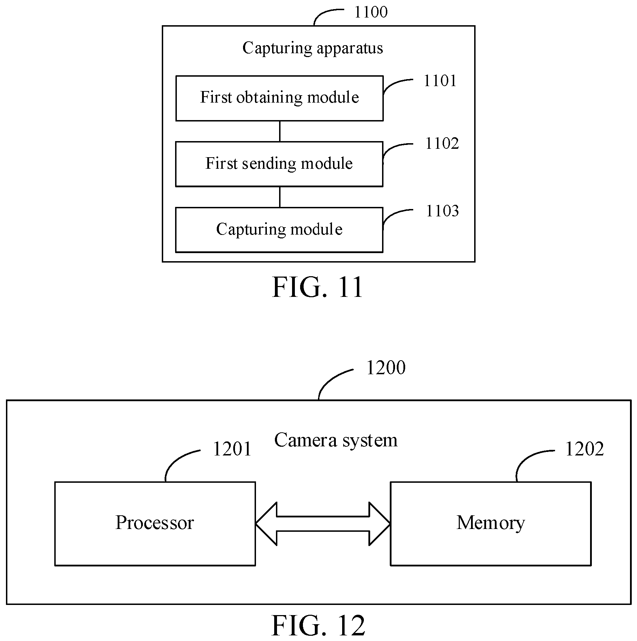

As shown in FIG. 11, an embodiment of this application further provides a capturing apparatus. The apparatus 1100 may include:
a first obtaining module 1101, configured to obtain a RAW image with a first preset quantity of frames based on an i^{th} capturing request sent by a camera application;
a first sending module 1102, configured to obtain a first RAW image based on an i^{th} capturing request sent by a camera application at a first moment, and then send a first notification message to the camera application, where the first notification message is used for notifying that the camera application is allowed to continue to send a capturing request, and i is a positive integer greater than or equal to 1; and
a capturing module 1103, configured to obtain, when an (i+1)^{th} capturing request sent by the camera application at a second moment is received, a second RAW image based on the (i+1)^{th} capturing request, where an interval between the first moment and the second moment is greater than or equal to a first preset duration and less than a second preset duration, and the second preset duration is twice the first preset duration.

Optionally, the first obtaining module 1101 includes:
a first obtaining unit, configured to obtain n frames of the first RAW image when i is less than or equal to a preset quantity of times, where n is a positive integer greater than or equal to 2; or
a second obtaining unit, configured to obtain one frame of the first RAW image when i is greater than the preset quantity of times.

Optionally, the apparatus further includes:
a second processing module, configured to add, after each frame of the first RAW image is obtained during the obtaining of the first RAW image, a number of the obtained first RAW image to a first queue, where the number of the first RAW image includes a capture ordinal corresponding to the first RAW image, or the number of the first RAW image includes the capture ordinal corresponding to the first RAW image and a frame number of the first RAW image in the capture ordinal.

The first queue is a queue of numbers of to-be-processed RAW images; capture ordinals of remaining numbers in the first queue other than a capture ordinal of a target number are reversely ordered, the capture ordinal of the target number is the same as a first capture ordinal, the first capture ordinal is a capture ordinal corresponding to a RAW image on which image processing is being performed currently; and if the capture ordinal corresponds to at least two frames of the RAW image, frame numbers corresponding to the at least two frames of the RAW image are arranged in sequence in the capture ordinal.

Optionally, the second processing module includes:
a third processing unit, configured to add the number of the obtained first RAW image after a first position of the first queue when the first capture ordinal is an i^{th} time, and a frame number in the number of the obtained first RAW image represents a j^{th} frame of the first RAW image in all the first RAW images, where the first position is a position in which a number of a (j-1)^{th} frame of the first RAW image in all the first RAW images is located; or
a fourth processing unit, configured to add the number of the obtained first RAW image after a second position of the first queue when the first capture ordinal is different from the i^{th} time and the frame number in the number of the obtained first RAW image represents a first frame of the first RAW image in all the first RAW images, where the second position is a position of a frame number ranked last in the first capture ordinal in the first queue; or
a fifth processing unit, configured to add the number of the obtained first RAW image after a third position of the first queue when the first capture ordinal is different from the i^{th} time, the number of the obtained first RAW image represents a k^{th} frame of the first RAW image in all the first RAW images, and k ≠ 1, where the third position is a position of a frame number of a (k-1)^{th} frame of the first RAW image in all the first RAW images, a position of a frame number of a first frame of the first RAW image in all the first RAW images is ranked after a fourth position in the first queue, and the fourth position is the position of the frame number ranked last in the first capture ordinal.

Optionally, the apparatus further includes:
a third processing module, configured to store the first RAW image frame by frame in a flash memory based on an image obtaining sequence after the first RAW image is obtained.

Optionally, the apparatus further includes:
a fourth processing module, configured to store the first RAW image frame by frame in a random access memory RAM based on the image obtaining sequence after the first RAW image is obtained and i is less than or equal to a preset value; or
a fifth processing module, configured to store the first RAW image in the flash memory frame by frame based on the image obtaining sequence after the first RAW image is obtained and i is greater than the preset value.

Optionally, the apparatus further includes:
a sixth processing module, configured to read, when image processing starts to be performed for an i^{th} capturing based on a number order in the first queue, a cached first RAW image corresponding to the i^{th} capturing from the flash memory; and
a seventh processing module, configured to perform image processing on the first RAW image corresponding to the i^{th} capturing, to obtain a processed image frame.

Optionally, the apparatus further includes:
an eighth processing module, configured to read, when image processing starts to be performed for the i^{th} capturing based on a number order in the first queue, a cached first RAW image corresponding to the i^{th} capturing from the RAM if i is less than or equal to the preset value; or
a ninth processing module, configured to read, when image processing starts to be performed for the i^{th} capturing based on the number order in the first queue and i is greater than the preset value, a cached first RAW image corresponding to the i^{th} capturing from the flash memory; or
a tenth processing module, configured to perform image processing on the first RAW image corresponding to the i^{th} capturing, to obtain a processed image frame.

Optionally, the apparatus further includes:
a second sending module, configured to send a second notification message to the camera application after a second RAW image is obtained. The second notification message is used for notifying that the camera application is allowed to continue to send a capturing request.

In the capturing apparatus in embodiments of this application, the first RAW image is obtained based on the i^{th} capturing request sent by the camera application at the first moment, and then the first notification message is sent to the camera application. The first notification message is used for notifying that the camera application is allowed to continue to send a capturing request, and i is a positive integer greater than or equal to 1. In this way, the camera application may learn that image capturing corresponding to this capturing request ends, and a process of delivering a next capturing request may be performed. When the (i+1)^{th} capturing request sent by the camera application at the second moment is received, the second RAW image is obtained based on the (i+1)^{th} capturing request. An interval between the first moment and the second moment is greater than or equal to a first preset duration and less than a second preset duration, and the second preset duration is twice the first preset duration. In this way, a capturing interval is relatively uniform through coordination of the camera system and the camera application, thereby improving capturing experience of a user.

The capturing apparatus provided in embodiments of this application can implement all processes implemented in the method embodiments of FIG. 1. To avoid repetition, details are not described herein again.

As shown in FIG. 12, an embodiment of this application further provides a camera system 1200, including a processor 1201 and a memory 1202. The memory 1202 stores a program or instructions executable in the processor 1201. When executed by the processor 1201, the program or the instructions implement the steps of the foregoing capturing method embodiments, and the same technical effects can be achieved. To avoid repetition, details are not described herein again.

It should be noted that the electronic device in this embodiment of this application includes both the mobile electronic device and the non-mobile electronic device described above.

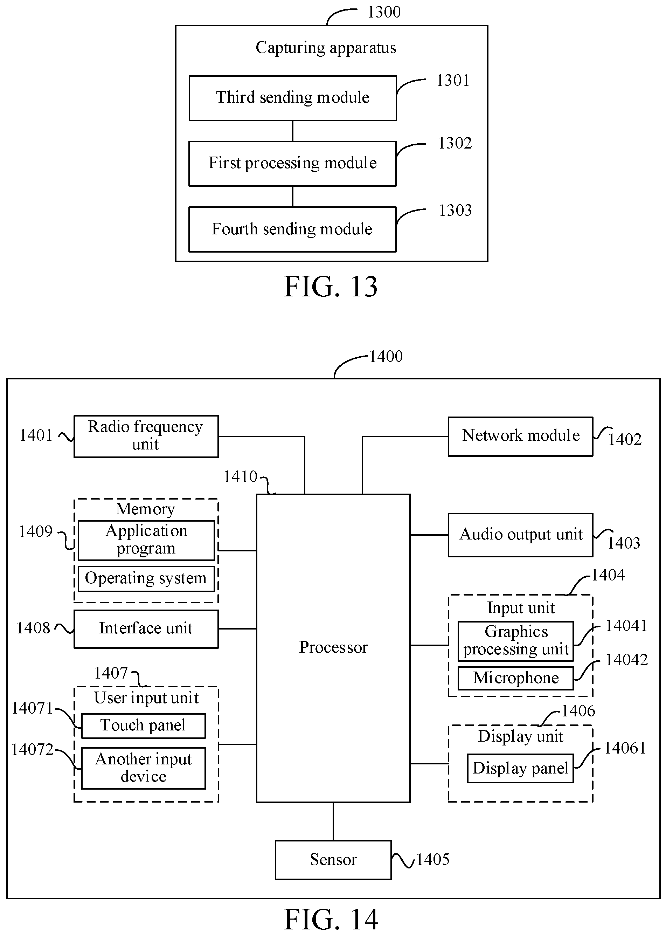

As shown in FIG. 13, an embodiment of this application further provides a capturing apparatus. The apparatus 1300 may include:
a third sending module 1301, configured to send an i^{th} capturing request to a camera system at a first moment, where i is a positive integer greater than or equal to 1;
a first processing module 1302, configured to determine, when the first notification message sent by the camera system is received, and an (i+1)^{th} capturing request exists, a second moment based on a moment at which the i^{th} capturing request is generated and a moment at which the (i+1)^{th} capturing request is generated; and
a fourth sending module 1303, configured to send the (i+1)^{th} capturing request to the camera system at the second moment.

The first notification message is used for notifying that the camera application is allowed to continue to send a capturing request, an interval between the first moment and the second moment is greater than or equal to a first preset duration and less than a second preset duration, and the second preset duration is twice the first preset duration.

Optionally, the first processing module 1302 includes:
a first processing unit, configured to determine that the second moment is a moment separated from the first moment by the first preset duration when an interval between the moment at which the (i+1)^{th} capturing request is generated and the moment at which the i^{th} capturing request is generated is less than the first preset duration; or
a second processing unit, configured to determine that the second moment is the moment at which the (i+1)^{th} capturing request is generated when the interval between the moment at which the (i+1)^{th} capturing request is generated and the moment at which the i^{th} capturing request is generated is greater than or equal to the first preset duration and is less than the second preset duration.

Optionally, the apparatus further includes:
a recording module, configured to record, when an interval between the moment at which the (i+1)^{th} capturing request is generated and the moment at which the i^{th} capturing request is generated is less than the first preset duration, the (i+1)^{th} capturing request after the moment at which the (i+1)^{th} capturing request is generated.

The fourth sending module 1303 includes:
a first sending unit, configured to send, when it is determined at the second moment that the (i+1)^{th} capturing request is recorded, the (i+1)^{th} capturing request to the camera system.

Optionally, the apparatus further includes:
a tenth processing module, configured to prohibit, when the first notification message sent by the camera system has not been received at a third moment and the (i+1)^{th} capturing request exists, sending of the (i+1)^{th} capturing request, where a time interval between the third moment and the first moment is the first preset duration.

Optionally, the apparatus further includes:
an eleventh processing module, configured to clear, when a capturing input from a user has not been received within an m^{th} first preset duration and a capturing request is recorded before the m^{th} first preset duration, the recorded capturing request, where m is a positive integer greater than 1.

According to the capturing apparatus in embodiments of this application, the i^{th} capturing request is sent to the camera system at the first moment, where i is a positive integer greater than or equal to 1. When the first notification message sent by the camera system is received, and an (i+1)^{th} capturing request exists, a second moment is determined based on a moment at which the i^{th} capturing request is generated and a moment at which the (i+1)^{th} capturing request is generated. The (i+1)^{th} capturing request is sent to the camera system at the second moment. The first notification message is used for notifying that the camera application is allowed to continue to send a capturing request. An interval between the first moment and the second moment is greater than or equal to a first preset duration and less than a second preset duration, and the second preset duration is twice the first preset duration. In this way, the camera system cooperates with the camera application, so that a capturing interval is relatively uniform, thereby improving capturing experience of a user.

The capturing apparatus in embodiments of this application may be an electronic device, or may be a component in the electronic device, for example, an integrated circuit or a chip. The electronic device may be a terminal, or may be another device other than a terminal. In an example, the electronic device may be a mobile phone, a tablet computer, a notebook computer, a palm computer, an on-board electronic device, a mobile Internet apparatus (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a network attached storage (Network Attached Storage, NAS), a personal computer (personal computer, PC), a television (television, TV), a teller machine, an automated machine, or the like, which is not specifically defined in this embodiment of this application.

The capturing apparatus in embodiments of this application may be an apparatus having an operating system. The operating system may be an Android (Android) operating system, an IOS operating system, or another possible operating system. This is not specifically limited in embodiments of this application.

The capturing apparatus provided in embodiments of this application can implement all processes implemented in the method embodiment of FIG. 9. To avoid repetition, details are not described herein again.

An embodiment of this application further provides a camera application. When executed, the camera application implements the steps of the capturing method embodiment in FIG. 9, and can achieve the same technical effect. To avoid duplication, details are not described herein again.

FIG. 14 is a schematic diagram of a hardware structure of an electronic device according to an embodiment of this application.

The electronic device 1400 includes, but is not limited to, components such as a radio frequency unit 1401, a network module 1402, an audio output unit 1403, an input unit 1404, a sensor 1405, a display unit 1406, a user input unit 1407, an interface unit 1408, a memory 1409, a processor 1410, a camera system, and a camera application, and the memory 1409 includes an RAM and a flash memory.

A person skilled in the art may understand that the electronic device 1400 may further include a power supply (such as a battery) for supplying power to the components. The power supply may be logically connected to the processor 1410 through a power management system, thereby implementing functions such as charging, discharging, and power consumption management through the power management system. The electronic device structure shown in FIG. 14 constitutes no limitation on an electronic device, and the electronic device may include more or fewer components than those shown in the figure, or some merged components, or different component arrangements. Details are not described herein again.

The camera system may perform the following steps through a processor:
obtaining a first RAW image based on an i^{th} capturing request sent by a camera application at a first moment, and then sending a first notification message to the camera application, where the first notification message is used for notifying that the camera application is allowed to continue to send a capturing request, and i is a positive integer greater than or equal to 1; and
obtaining, when an (i+1)^{th} capturing request sent by the camera application at a second moment is received, a second RAW image based on the (i+1)^{th} capturing request, where an interval between the first moment and the second moment is greater than or equal to a first preset duration and less than a second preset duration, and the second preset duration is twice the first preset duration.

Optionally, the processor is further configured to:
obtain n frames of the first RAW image when i is less than or equal to a preset quantity of times, where n is a positive integer greater than or equal to 2; or
obtaining one frame of the first RAW image when i is greater than the preset quantity of times.

Optionally, the processor is further configured to:
add, after each frame of the first RAW image is obtained during the obtaining of the first RAW image, a number of the obtained first RAW image to a first queue, where the number of the first RAW image includes a capture ordinal corresponding to the first RAW image, or the number of the first RAW image includes the capture ordinal corresponding to the first RAW image and a frame number of the first RAW image in the capture ordinal;

The first queue is a queue of numbers of to-be-processed RAW images; capture ordinals of remaining numbers in the first queue other than a capture ordinal of a target number are reversely ordered, the capture ordinal of the target number is the same as a first capture ordinal, the first capture ordinal is a capture ordinal corresponding to a RAW image on which image processing is being performed currently; and if the capture ordinal corresponds to at least two frames of the RAW image, frame numbers corresponding to the at least two frames of the RAW image are arranged in sequence in the capture ordinal.

Optionally, the processor is further configured to:
add the number of the obtained first RAW image after a first position of the first queue when the first capture ordinal is an i^{th} time, and a frame number in the number of the obtained first RAW image represents a j^{th} frame of the first RAW image in all the first RAW images, where the first position is a position in which a number of a (j-1)^{th} frame of the first RAW image in all the first RAW images is located; or
add the number of the obtained first RAW image after a second position of the first queue when the first capture ordinal is different from the i^{th} time and the frame number in the number of the obtained first RAW image represents a first frame of the first RAW image in all the first RAW images, where the second position is a position of a frame number ranked last in the first capture ordinal in the first queue; or
add the number of the obtained first RAW image after a third position of the first queue when the first capture ordinal is different from the i^{th} time, the number of the obtained first RAW image represents a k^{th} frame of the first RAW image in all the first RAW images, and k ≠ 1, where the third position is a position of a frame number of a (k-1)^{th} frame of the first RAW image in all the first RAW images, a position of a frame number of a first frame of the first RAW image in all the first RAW images is ranked after a fourth position in the first queue, and the fourth position is the position of the frame number ranked last in the first capture ordinal.

Optionally, the processor is further configured to:
store the first RAW image frame by frame in a flash memory based on an image obtaining sequence after the first RAW image is obtained.

Optionally, the processor is further configured to:
store the first RAW image frame by frame in a random access memory RAM based on the image obtaining sequence after the first RAW image is obtained and i is less than or equal to a preset value; or
store the first RAW image frame by frame in a flash memory based the image obtaining sequence after the first RAW image is obtained and i is greater than the preset value.

Optionally, the processor is further configured to:
read, when image processing starts to be performed for i^{th} capturing based on a number order in the first queue, a cached first RAW image corresponding to the i^{th} capturing from the flash memory; and
perform image processing on the first RAW image corresponding to the i^{th} capture, to obtain a processed image frame.

Optionally, the processor is further configured to:
read, when image processing starts to be performed for i^{th} capturing based on a number order in the first queue, a cached first RAW image corresponding to the i^{th} capturing from the RAM if i is less than or equal to the preset value;
read the cached first RAW image corresponding to the i^{th} capturing from the flash memory if i is greater than the preset value; and
perform image processing on the first RAW image corresponding to the i^{th} capture, to obtain a processed image frame.

Optionally, the processor is further configured to:
send a second notification message to the camera application, where the second notification message is used for notifying that the camera application is allowed to continue to send a capturing request.

The camera application performs the steps of the foregoing capturing method in FIG. 9.

According to embodiments of this application, the camera system cooperates with the camera application, so that a capturing interval is relatively uniform, thereby improving capturing experience of a user. Through "real-time reverse order" capturing processing, a capturing sequence is subjected to proper re-ordering in real time during capturing, and a last capturing request is preferentially processed, so that a user can see a latest captured photo, thereby improving capturing experience of the user. Through a characteristic of an extremely fast read and write speed of a flash memory, a RAW image captured in a high-speed capture process is cached to the flash memory. During actual processing of this capturing, the RAW image is read from the flash memory for processing. In this way, capturing performance may be greatly improved, and a quantity of times and experience for the high-speed capture are improved.

It should be noted that in embodiments of this application, the input unit 1404 may include a graphics processing unit (Graphics Processing Unit, GPU) 14041 and a microphone 14042. The graphics processing unit 14041 processes image data of a static picture or a video obtained by an image capture apparatus (such as a camera) in a video capture mode or an image capture mode. The display unit 1406 may include a display panel 14061. The display panel 14061 may be configured in a form such as a liquid crystal display or an organic light-emitting diode. The user input unit 1407 includes at least one of a touch panel 14071 or another input device 14072. The touch panel 14071 is also referred to as a touch screen. The touch panel 14071 may include two parts: a touch detection apparatus and a touch controller. The another input device 14072 may include, but is not limited to, a physical keyboard, a function button (such as a volume control button or a power button), a trackball, a mouse, and a joystick. Details are not described herein again.

The memory 1409 may be configured to store a software program and various data. The memory 1409 may mainly include a first storage area for storing a program or instructions and a second storage area for storing data. The first storage area may store an operating system, an application or instructions required for at least one function (such as a sound playback function and an image playback function), and the like. In addition, the memory 1409 may include a volatile memory or a non-volatile memory, or the memory 1409 may include both the volatile memory and the non-volatile memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 in embodiments of this application includes, but is not limited to, these and any other suitable types of memories.

The processor 1410 may include one or more processing units. Optionally, the processor 1410 integrates an application processor and a modem processor. The application processor mainly processes operations related to an operating system, a user interface, an application program, and the like. The modem processor mainly processes wireless communication signals, and is for example a baseband processor. It may be understood that the foregoing modem processor may alternatively not be integrated into the processor 1410.

An embodiment of this application further provides a readable storage medium. The readable storage medium stores a program or instructions. The program or the instructions, when executed by a processor, implements the processes of the foregoing capturing method embodiments, and can achieve the same technical effect. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions, to implement the processes of the foregoing capturing method embodiments, and can achieve the same technical effect. To avoid repetition, details are not described herein again.

It should be understood that the chip mentioned in this embodiment of this application may further be referred to as a system level chip, a system chip, a chip system, a system on chip, or the like.

An embodiment of this application provides a computer program product. The program product is stored in a storage medium. The program product is executed by at least one processor to implement the processes of the foregoing capturing method embodiments, and can achieve the same technical effect. To avoid repetition, details are not described herein again.

It should be noted that in this specification, terms "include", "comprise", or any other variants thereof are intended to encompass non-exclusive inclusion, so that a process, a method, an article, or an apparatus including a series of elements not only includes those elements, but also includes another element not listed explicitly, or includes elements inherent to the process, the method, the article, or the apparatus. Without any further limitation, an element defined by the phrase "include one ..." does not exclude existence of an additional same element in the process, the method, the article, or the device that includes the element. In addition, it should be noted that the scope of the method and the apparatus in implementations of this application is not limited to execution of functions in the order shown or discussed, and may further include execution of functions in a substantially simultaneous manner or in a reverse order based on the functions involved. For example, the described method may be performed in a different order from the described order, and various steps may also be added, omitted, or combined. Moreover, features described with reference to some examples may be combined in another example.

According to the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, a network device, or the like) to perform the method in embodiments of this application.

Although embodiments of this application are described above with reference to the drawings, this application is not limited to the specific embodiments described above. The foregoing specific embodiments are illustrative but not restrictive. With the enlightenment of this application, a person of ordinary skill in the art may make many forms without departing from the concept of this application and the protection scope of the claims. These forms fall into the protection of this application.

## Claims

1. A capturing method, comprising:
obtaining a first RAW image based on an i^{th} capturing request sent by a camera application at a first moment, and then sending a first notification message to the camera application, wherein the first notification message is used for notifying that the camera application is allowed to continue to send a capturing request, and i is a positive integer greater than or equal to 1; and
obtaining, when an (i+1)^{th} capturing request sent by the camera application at a second moment is received, a second RAW image based on the (i+1)^{th} capturing request, wherein an interval between the first moment and the second moment is greater than or equal to a first preset duration and less than a second preset duration, and the second preset duration is twice the first preset duration.

2. The method according to claim 1, wherein the obtaining the first RAW image comprises:
obtaining n frames of the first RAW image when i is less than or equal to a preset quantity of times, wherein n is a positive integer greater than or equal to 2; or
obtaining one frame of the first RAW image when i is greater than the preset quantity of times.

3. The method according to claim 1, further comprising:
adding, after each frame of the first RAW image is obtained during the obtaining of the first RAW image, a number of the obtained first RAW image to a first queue, wherein the number of the first RAW image comprises a capture ordinal corresponding to the first RAW image, or the number of the first RAW image comprises the capture ordinal corresponding to the first RAW image and a frame number of the first RAW image in the capture ordinal;
the first queue is a queue of numbers of to-be-processed RAW images; capture ordinals of remaining numbers in the first queue other than a capture ordinal of a target number are reversely ordered, the capture ordinal of the target number is the same as a first capture ordinal, the first capture ordinal is a capture ordinal corresponding to a RAW image on which image processing is being performed currently; and if the capture ordinal corresponds to at least two frames of the RAW image, frame numbers corresponding to the at least two frames of the RAW image are arranged in sequence in the capture ordinal.

4. The method according to claim 3, wherein the adding the number of the obtained first RAW image to the first queue comprises:
adding the number of the obtained first RAW image after a first position of the first queue when the first capture ordinal is an i^{th} time, and a frame number in the number of the obtained first RAW image represents a j^{th} frame of the first RAW image in all the first RAW images, wherein the first position is a position in which a number of a (j-1)^{th} frame of the first RAW image in all the first RAW images is located; or
adding the number of the obtained first RAW image after a second position of the first queue when the first capture ordinal is different from the i^{th} time and the frame number in the number of the obtained first RAW image represents a first frame of the first RAW image in all the first RAW images, wherein the second position is a position of a frame number ranked last in the first capture ordinal in the first queue; or
adding the number of the obtained first RAW image after a third position of the first queue when the first capture ordinal is different from the i^{th} time, the number of the obtained first RAW image represents a k^{th} frame of the first RAW image in all the first RAW images, and k ≠ 1, wherein the third position is a position of a frame number of a (k-1)^{th} frame of the first RAW image in all the first RAW images, a position of a frame number of a first frame of the first RAW image in all the first RAW images is ranked after a fourth position in the first queue, and the fourth position is the position of the frame number ranked last in the first capture ordinal.

5. The method according to claim 3, further comprising:
storing the first RAW image frame by frame in a flash memory based on an image obtaining sequence after the first RAW image is obtained.

6. The method according to claim 3, further comprising:
storing the first RAW image frame by frame in a random access memory RAM based on the image obtaining sequence after the first RAW image is obtained and i is less than or equal to a preset value; or
storing the first RAW image frame by frame in a flash memory based on the image obtaining sequence after the first RAW image is obtained and i is greater than the preset value.

7. The method according to claim 5, further comprising:
reading, when image processing starts to be performed for i^{th} capturing based on a number order in the first queue, a cached first RAW image corresponding to the i^{th} capturing from the flash memory; and
performing image processing on the first RAW image corresponding to the i^{th} capturing, to obtain a processed image frame.

8. The method according to claim 6, further comprising:
reading, when image processing starts to be performed for i^{th} capturing based on a number order in the first queue, a cached first RAW image corresponding to the i^{th} capturing from the RAM if i is less than or equal to the preset value;
reading the cached first RAW image corresponding to the i^{th} capturing from the flash memory if i is greater than the preset value; and
performing image processing on the first RAW image corresponding to the i^{th} capture, to obtain a processed image frame.

9. The method according to claim 1, wherein after the obtaining the second RAW image, the method further comprises:
sending a second notification message to the camera application, wherein the second notification message is used for notifying that the camera application is allowed to continue to send a capturing request.

10. A capturing method, comprising:
sending an i^{th} capturing request to a camera system at a first moment, wherein i is a positive integer greater than or equal to 1;
determining, when the first notification message sent by the camera system is received, and an (i+1)^{th} capturing request exists, a second moment based on a moment at which the i^{th} capturing request is generated and a moment at which the (i+1)^{th} capturing request is generated; and
sending the (i+1)^{th} capturing request to the camera system at the second moment,
wherein the first notification message is used for notifying that the camera application is allowed to continue to send a capturing request, an interval between the first moment and the second moment is greater than or equal to a first preset duration and less than a second preset duration, and the second preset duration is twice the first preset duration.

11. The method according to claim 10, wherein the determining the second moment based on the moment at which the i^{th} capturing request is generated and the moment at which the (i+1)^{th} capturing request is generated comprises:
determining that the second moment is a moment separated from the first moment by the first preset duration when an interval between the moment at which the (i+1)^{th} capturing request is generated and the moment at which the i^{th} capturing request is generated is less than the first preset duration; or
determining that the second moment is the moment at which the (i+1)^{th} capturing request is generated when the interval between the moment at which the (i+1)^{th} capturing request is generated and the moment at which the i^{th} capturing request is generated is greater than or equal to the first preset duration and is less than the second preset duration.

12. The method according to claim 10, further comprising:
recording, when an interval between the moment at which the (i+1)^{th} capturing request is generated and the moment at which the i^{th} capturing request is generated is less than the first preset duration, the (i+1)^{th} capturing request after the moment at which the (i+1)^{th} capturing request is generated; and
the sending the (i+1)^{th} capturing request to the camera system at the second moment comprises:
sending, when it is determined at the second moment that the (i+1)^{th} capturing request is recorded, the (i+1)^{th} capturing request to the camera system.

13. The method according to claim 10, further comprising:
prohibiting, when the first notification message sent by the camera system has not been received at a third moment and the (i+1)^{th} capturing request exists, sending of the (i+1)^{th} capturing request, wherein a time interval between the third moment and the first moment is the first preset duration.

14. The method according to claim 10, further comprising:
clearing, if a capturing request is recorded before an m^{th} first preset duration, the recorded capturing request when a capturing input from a user has not been received within the m^{th} first preset duration, wherein m is a positive integer greater than 1.

15. A capturing apparatus, comprising:
a first obtaining module, configured to obtain a first RAW image based on an i^{th} capturing request sent by a camera application at a first moment;
a first sending module, configured to obtain a first RAW image based on an i^{th} capturing request sent by a camera application at a first moment, and then send a first notification message to the camera application, wherein the first notification message is used for notifying that the camera application is allowed to continue to send a capturing request, and i is a positive integer greater than or equal to 1; and
a capturing module, configured to obtain, when an (i+1)^{th} capturing request sent by the camera application at a second moment is received, a second RAW image based on the (i+1)^{th} capturing request, wherein an interval between the first moment and the second moment is greater than or equal to a first preset duration and less than a second preset duration, and the second preset duration is twice the first preset duration.

16. A camera system, comprising a processor and a memory, wherein the memory stores a program or instructions executable in the processor, and the program or the instructions, when executed by the processor, implement the steps of the capturing method according to any one of claims 1 to 9.

17. A capturing apparatus, comprising:
a third sending module, configured to send an i^{th} capturing request to a camera system at a first moment, wherein i is a positive integer greater than or equal to 1;
a first processing module, configured to determine, when the first notification message sent by the camera system is received, and an (i+1)^{th} capturing request exists, a second moment based on a moment at which the i^{th} capturing request is generated and a moment at which the (i+1)^{th} capturing request is generated; and
a fourth sending module, configured to send the (i+1)^{th} capturing request to the camera system at the second moment,
wherein the first notification message is used for notifying that the camera application is allowed to continue to send a capturing request, an interval between the first moment and the second moment is greater than or equal to a first preset duration and less than a second preset duration, and the second preset duration is twice the first preset duration.

18. The apparatus according to claim 17, wherein the first processing module comprises:
a first processing unit, configured to determine that the second moment is a moment separated from the first moment by the first preset duration when an interval between the moment at which the (i+1)^{th} capturing request is generated and the moment at which the i^{th} capturing request is generated is less than the first preset duration; or
a second processing unit, configured to determine that the second moment is the moment at which the (i+1)^{th} capturing request is generated when the interval between the moment at which the (i+1)^{th} capturing request is generated and the moment at which the i^{th} capturing request is generated is greater than or equal to the first preset duration and is less than the second preset duration.

19. A camera application, wherein the camera application performs the steps of the capturing method according to any one of claims 10 to 14.

20. A readable storage medium, storing a program or instructions, wherein the program or the instructions, when executed by a processor, implement the steps of the capturing method according to any one of claims 1 to 9, or implement the steps of the capturing method according to any one of claims 10 to 14.

21. An electronic device, comprising a processor and a memory, wherein the memory stores a program or instructions executable in the processor, and the program or the instructions, when executed by the processor, implement the steps of the capturing method according to any one of claims 1 to 9, or implement the steps of the capturing method according to any one of claims 10 to 14.

22. An electronic device, configured to perform the steps of the capturing method according to any one of claims 1 to 9, or implement the steps of the capturing method according to any one of claims 10 to 14.

23. A chip, comprising a processor and a communication interface, wherein the communication interface is coupled to the processor, and the processor is configured to run a program or instructions to implement the steps of the capturing method according to any one of claims 1 to 9, or implement the steps of the capturing method according to any one of claims 10 to 14.

24. A computer program product, stored in a non-transient storage medium, wherein the computer program product is executed by at least one processor to implement the steps of the capturing method according to any one of claims 1 to 9, or implement the steps of the capturing method according to any one of claims 10 to 14.
